# EUROPEAN PATENT APPLICATION

(11) **EP 2 521 090 A2**
(43) Date of publication of application: **07.11.2012**
(21) Application number: 12160061.3
(22) Date of filing: 19.03.2012
(51) Int. Cl.: G06T 3/40

(54) **Image processing method, image processing apparatus, and display apparatus**

(30) Priority: 02.05.2011 JP 2011103037
(71) Applicant: Sony Corporation, Tokyo 108-0075 (JP)
(72) Inventor: Ooi, Takuya, Minato-ku, Tokyo 108-0075 (JP); Ishikawa, Takanori, Minato-ku, Tokyo 108-0075 (JP); Doba, Kentaro, Minato-ku, Tokyo 108-0075 (JP)
(74) Representative: Haines, Miles John L.S.

(57) **Abstract**

There is provided an image processing method which includes obtaining a first original image and a second original image, and determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image

## Description

The present invention relates to an image processing method, an image processing apparatus, and a display apparatus

It is known to generate an interpolation image of a desired generation phase using parallactic information and stereo images including a left eye image (hereinafter referred to as L image) and a right eye image (hereinafter referred to as R image) The generated interpolation image is mainly displayed as a certain viewpoint image of multi-viewpoint images at a predetermined position of a display apparatus allowing stereoscopic viewing For example, the parallactic information is obtained by generating, as a disparity map, the amount of displacement in the horizontal direction of the LR images.

However, when an interpolation image is generated based on a disparity map, an interpolation error may occur due to an extraction error of disparity (parallax). An example of interpolation error includes a phenomenon in which a coordinate of the interpolation image at which a pixel representing a foreground is already drawn is overwritten with a pixel representing a background As a result, in a portion of the interpolation image, the foreground is invaded by the background, which degrades the image quality of the interpolation image

Accordingly, an image processing method, an image processing apparatus, and a display apparatus capable of reducing or preventing drawing error during generation of an interpolation image and improving the image quality of the interpolation image have been desired.

According to an embodiment of the present invention, there is provided an image processing method which includes obtaining a first original image and a second original image, and determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image

According to another embodiment of the present invention, there is provided an image processing apparatus which includes an obtaining unit for obtaining a first original image and a second original image, and an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image

According to another embodiment of the present invention, there is provided a display apparatus which includes an obtaining unit for obtaining a first original image and a second original image, an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image, and a display control unit for controlling display of the first original image, the second original image, and the interpolation image

As described above an image processing method, an image processing apparatus, and a display apparatus capable of reducing or preventing drawing error during generation of an interpolation image and improving the image quality of the interpolation image can be provided

### BRIEF DESCRIPTION OF THE DRAWINGS

FIG. 1 is a functional configuration diagram illustrating an image processing apparatus according to first and second embodiments,
FIG. 2 is a flowchart illustrating image processing according to the first embodiment,
FIG. 3 is a figure illustrating extraction of disparity according to the first and second embodiments;
FIG. 4 is a flowchart illustrating interpolation image generation processing according to the first embodiment;
FIG. 5 is a figure illustrating interpolation image generation of an L image according to the first embodiment,
FIG. 6 is a figure illustrating interpolation image generation of an R image according to the first embodiment,
FIG. 7 is a figure illustrating merging of interpolation images of the LR images according to the first embodiment;
FIG. 8 is a flowchart illustrating image processing according to the second embodiment,
FIG. 9 is a figure illustrating interpolation image generation processing of a selected original image according to the second embodiment;
FIG. 10 is a figure illustrating interpolation image generation processing of an unselected original image according to the second embodiment, and
FIG. 11 is a figure illustrating an example of interpolation error.

### DETAILED DESCRIPTION

Hereinafter, embodiments of the present invention will be described in detail with reference to the appended drawings In this specification and the appended drawings, structural elements that have substantially the same functions and structures are denoted with the same reference numerals, and repeated explanation of these structural elements is omitted

The following explanation will be made in the order listed below
1. First embodiment
   1.1. Function of image processing apparatus
   1.2. Operation of image processing apparatus
      1.2.1. Extraction of disparity
      1.2.2. Example where interpolation image is generated from L image
      1.2.3. Example where interpolation image is generated from R image
      1.2.4. Merging of interpolation image generated from LR images
   1.3. Examples of effects
2. Second embodiment
   2.1. Function of image processing apparatus
   2.2. Operation of image processing apparatus
      2.2.1 Example where interpolation image is generated from selected original image
      2.2.2 Example where interpolation image is generated from unselected original image
   2.3. Examples of effects

### <1. First embodiment>

### [1.1 Function of image processing apparatus]

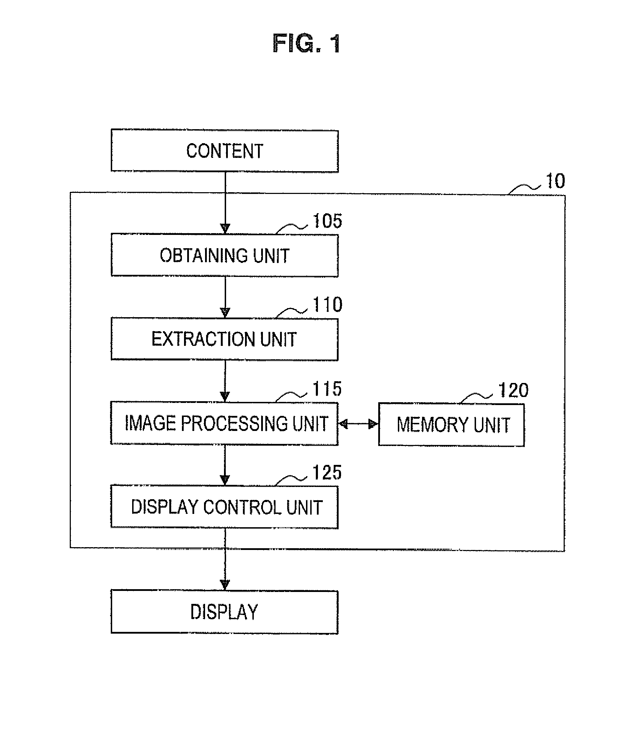

First, a functional configuration of an image processing apparatus according to a first embodiment of the present disclosure will be explained with reference to FIG 1. An image processing apparatus 10 according to the first embodiment includes an obtaining unit 105, an extraction unit 110, an image processing unit 115, a memory unit 120, and a display control unit 125,

The obtaining unit 105 obtains stereo images of an L image and an R image of a content Information about obtainable contents includes a case where there is only a video signal of a stereo image and a case where there are disparity information and a video signal of a stereo image such as CG (Computer Graphics)

When the obtaining unit 105 obtains only the video signal of the stereo image, the extraction unit 110 generates a disparity map from the amount of displacement in the horizontal direction of the L image and the R image. The disparity map is an example of parallactic information, and it is not necessary to make the parallactic information into a map. When obtaining unit 105 obtains the disparity, extraction of the disparity by the extraction unit 110 may be omitted.

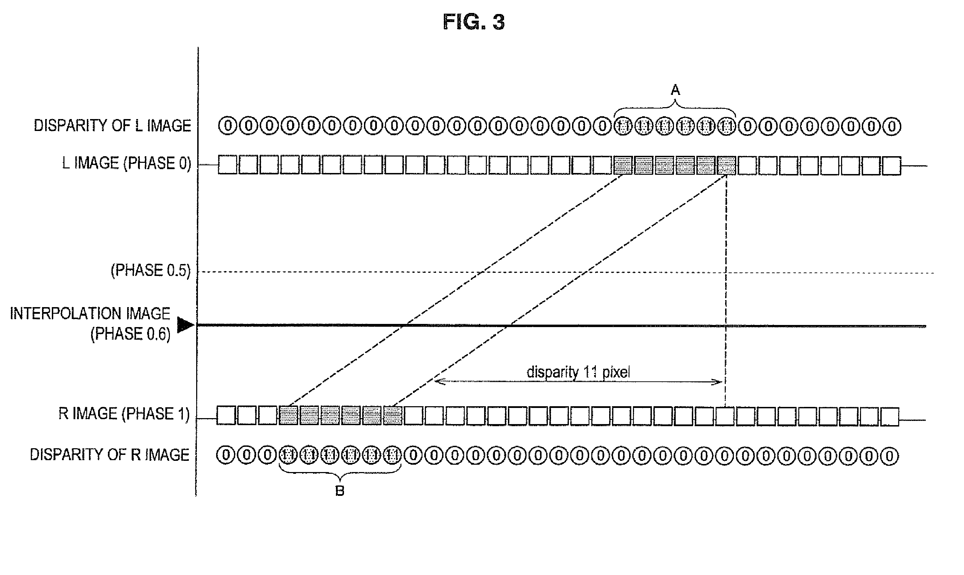

For example, in FIG. 3, disparities in the horizontal lines corresponding to the L image and the R image at the upper end and the lower end are denoted as encircled numbers In lines adjacent thereto, video information in the horizontal lines corresponding to the L image and the R image is denoted as rectangles FIG. 3 shows only one horizontal line, but disparities corresponding to the number of lines of the content are extracted

In the first and second embodiments, when the disparity of the L image is "0", there is no displacement from the disparity of the R image, i.e., the disparity of the pixel in the L image and the disparity of the corresponding pixel in the R image are defined as being the same When the disparity of the L image is "11", this means that the L image and the R image are displaced 11 pixels. For example, in FIG. 3, it is understood that video information in a pixel region A having a disparity represented by "11" in the L image (image represented by filled rectangles) has the same video information as video information in a pixel region B having a disparity represented by "11" in the R image (image represented by filled rectangles) As described above, the disparity indicates corresponding points of the L image and the R image In other words, the disparity is the amount of displacement in the horizontal direction between the portions where the same video appears in the L image and the R image

The image processing unit 115 generates an interpolation image of a desired phase (generation phase) from the L image and the R image When the interpolation image is generated from the L image and the R image, the image processing unit 115 determines, in accordance with magnitude relationship between the disparity of the original image of one of the L image and the R image and the disparity of the interpolation image, whether video information about the original image of the one of the L image and the R image is drawn onto the interpolation image. More specifically, the image processing unit 115 determines, from the magnitude relationship between the disparities, whether the video information about the original image of one of the L image and the R image is a foreground or a background of the interpolation image When the video information about the L image or the R image is determined to be a foreground as a result of the determination, the image processing unit 115 draws the video information onto the interpolation image When the video information about the L image or the R image is determined to be a background as a result of the determination, the image processing unit 115 prohibits writing the video information to the interpolation image. FIG. 3 shows only one horizontal line. However, the above interpolation image generation processing is executed for the number of horizontal lines of the content

For example, when the values of the disparities are defined such that a numerical value indicating foreground is more than a numerical value indicating background, and the disparity of the image to be drawn is more than the disparity of the image on which the image is to be drawn, the image to be drawn is foreground Therefore, drawing of the image is permitted On the other hand, when the disparity of the image to be drawn is less than the disparity value of the image on which the image is to be drawn, the image to be drawn is background. Therefore, drawing of the image is prohibited Therefore, this prevents the foreground video from being overwritten by the background video However, the magnitude relationship between the disparity values and writing permission/prohibition are different according to how the numerical values representing the disparity values are defined. For example, when, in contrast to the present embodiment, the values of the disparities are defined such that a numerical value indicating foreground is less than a numerical value indicating background, the magnitude relationship of the disparity values and control of permission/prohibition of drawing of the image to be drawn are opposite to the control explained above In other words, when the disparity value of the image to be drawn is more than the disparity value of the image on which the image is to be drawn, drawing of the image to be drawn is prohibited When the disparity value of the image to be drawn is less than the disparity value of the image on which the image is to be drawn, drawing of the image to be drawn is permitted As described above, according to the present embodiment, depthwise relationship of the image to be drawn and the image onto which the image is drawn is determined from the magnitude relationship between the disparity values The image to be drawn is determined to be foreground as a result of the determination, drawing (overwriting) of the image is permitted. Otherwise, drawing of the image is prohibited

The memory unit 120 stores the video information and disparities of the first interpolation image and the second interpolation image, i.e., interpolation images during generation process

The display control unit 125 displays the interpolation image generated by the image processing unit 115 as well as the L image and the R image at a predetermined phase position. As a result, a multi-viewpoint image can be displayed on a display in such a manner as to allow stereoscopic viewing.

The functions of the extraction unit 110, the image processing unit 115, and display control unit 125 can be achieved when, for example, a CPU (Central Processing Unit), not shown, operates according to a program stored in the memory unit 120. This program may be stored and provided in a memory medium, and may be read to the memory unit 120 via a driver, not shown. Alternatively, it may be downloaded from a network and stored to the memory unit 120 In order to achieve the function of each of the above units, a DSP (Digital Signal Processor) may be used instead of the CPU. The memory unit 120 may be achieved as a RAM (Random Access Memory) or a ROM (Read Only Memory) using, for example, a semiconductor memory, a magnetic disk, or an optical disk. Alternatively, the function of each of the above units may be achieved with operation using software, and may be achieved with operation using hardware

### [1.2. Operation of image processing apparatus]

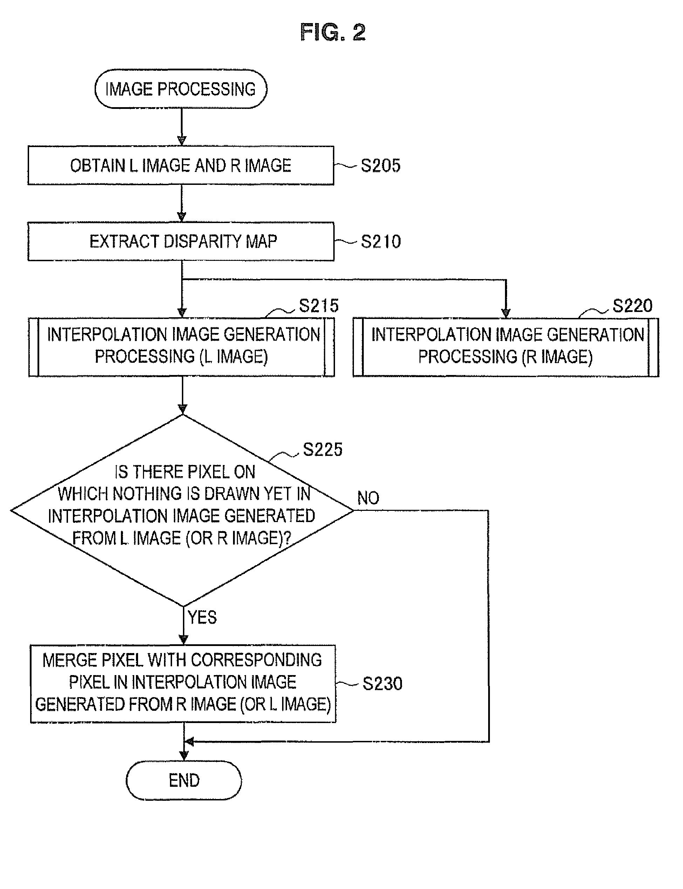

Subsequently, operation of the image processing apparatus 10 according to the first embodiment will be explained with reference to FIG. 2. FIG. 2 is a flowchart illustrating image processing according to the first embodiment. When this processing starts, in step S205, the obtaining unit 105 obtains the L image and the R image

### (1.2.1. Extraction of disparity)

Subsequently, in step S210, the extraction unit 110 generates a disparity map of the L image and a disparity map of the R image from the L image and the R image FIG 3 shows the disparity of the L image of a certain horizontal line, video information about the L image (phase 0), the disparity of the R image thereof, video information about the R image (phase 1), and the interpolation image to be generated of phase 0 6 (generation phase 0.6) As described above, this indicates that the video information about the L image corresponding to the disparity indicated by "11" of the L image and the video information about the R image corresponding to the disparity indicated by "11" of the R image displaced in the horizontal direction by 11 pixels from the coordinate of the L image are the same video In the present embodiment, the disparity value "0" indicates background, the disparity value "11" indicates foreground

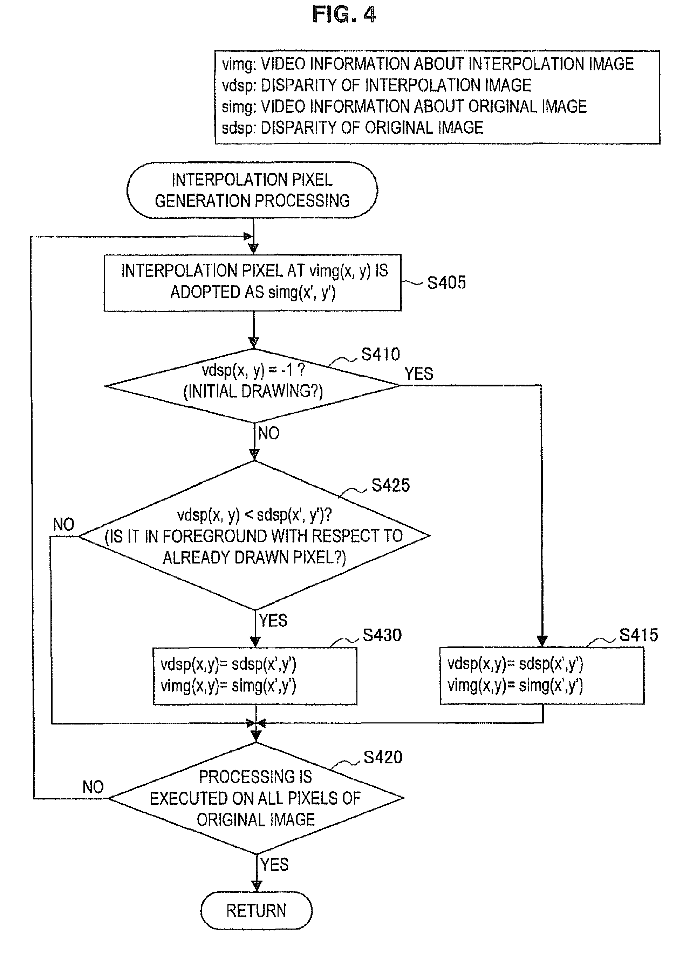

After the disparity is extracted, the processing branches into interpolation image generation processing (L image) in step S215 and interpolation image generation processing (R image) in step S220. The interpolation image generation processings of steps S215, S220 respectively execute the flowchart as shown in FIG. 4. In the interpolation image generation processing in step S215, an interpolation image (first interpolation image) of phase 0.6 is generated from the L image of the phase 0. In other words, in accordance with the magnitude relationship of the parallactic information about the L image and the parallactic information about the first interpolation image of phase 0.6, the video information about the L image is drawn onto the first interpolation image.. In the interpolation image generation processing of step S220, the interpolation image (second interpolation image) of phase 0.6 is generated from the R image of phase 1. In other words, in accordance with the magnitude relationship of the parallactic information about the R image and the parallactic information about the second interpolation image of phase 0 6, the video information about the R image is drawn onto the second interpolation image. It should be noted that the first interpolation image and second interpolation image is an intermediate image in the process of generation of the interpolation image generated from the L image and the R image for generating the interpolation image of phase 0.6, and as explained later, on the basis of the first and second interpolation images, the interpolation image of phase 0.6 is completed The processing in step S215 in which the video information about the L image is drawn onto the first interpolation image and the processing in step S220 in which the video information about the R image is drawn onto the second interpolation image can be performed in parallel. Therefore, the processing time can be reduced to half the processing time taken by the processing of steps S215, S220 performed in series.

### (1.2.2. Example where interpolation image is generated from L image)

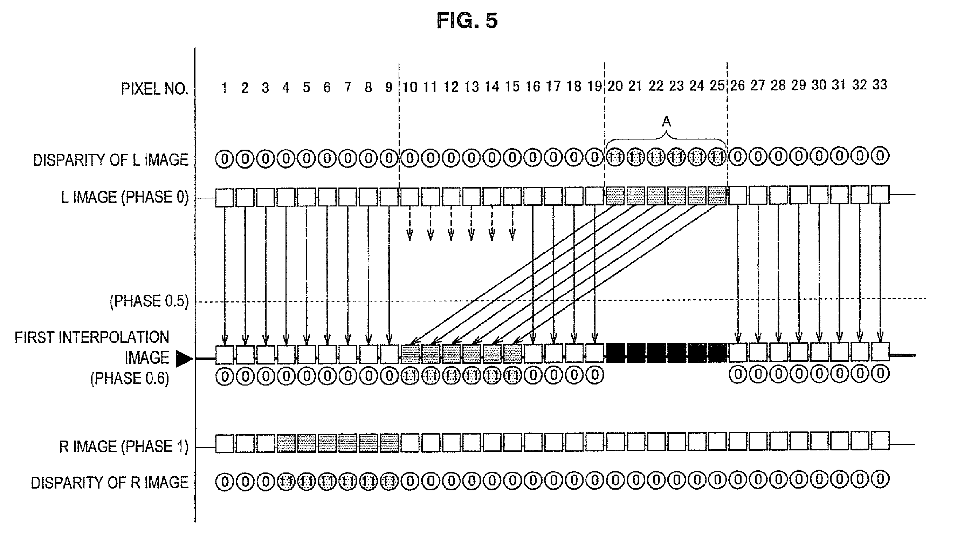

Subsequently, the interpolation image generation processing (FIG. 4) called in step S215 will be explained with reference to FIGS. 4 and 5 In FIG. 4, the video information about the interpolation image (first interpolation image) is denoted as vimg, and the video information about the coordinate (x, y) of the first interpolation image is denoted as vimg(x, y) The disparity of the first interpolation image is denoted as vdsp, and the disparity at a coordinate(x, y) of the first interpolation image is denoted as vdsp(x, y) It should be noted that before this processing is started, all the coordinate data of the video information vimg of the first interpolation image are initialized with "0", and all the coordinate data of the disparity vdsp of the first interpolation image are initialized with "-1".

The video information about the original image (in this case, L image) is denoted as simg, and the video information at a coordinate(x', y') of the original image is denoted as simg(x', y') The disparity of the original image (in this case, L image) is denoted as sdsp, and the disparity of the coordinate(x', y') of the original image is denoted as sdsp(x', y') The disparity vdsp and the video information vimg of the interpolation image and the disparity sdsp and the video information simg of the original image are stored to the memory unit 120.

In the interpolation image generation processing in step S215, the first interpolation image is generated from the L image This processing starts from step S405 First, the image processing unit 115 adopts the interpolation image at vimg(x, y) as an L image simg(x', y') FIG. 5 shows the process of generation of the first interpolation image from the L image The example of FIG. 5 shows how first interpolation pixels of phase 0 6 are generated pixel by pixel from the left side to the right side of the sheet. Alternatively, scanning may also be performed from the right to the left In this case, the disparity sdsp of the L image located at the left end is "0". For this reason, the coordinate of the first interpolation pixel vimg(x, y) corresponding to the pixel simg(x, y) of the L image is defined as being the same In other words, the displacement between the coordinate of the pixel at the left end of the first interpolation image vimg and the coordinate of the pixel at the left end of the L image simg is determined to be 0 pixel

Subsequently, in step S410, the image processing unit 115 determines whether the disparity vdsp(x, y) of the first interpolation pixel is equal to -1 (i e., whether it is initial drawing or not) In this case, all the coordinate data of the disparity vdsp of the interpolation pixel are initialized with "-1" Accordingly, the image processing unit 115 determines that the disparity vdsp(x, y) of the first interpolation pixel is equal to -1, and step S415 is subsequently performed, so that the disparity sdsp(x', y') of the L image is substituted into the disparity vdsp(x, y) of the first interpolation pixel, and the video information simg(x, y) of the L image is substituted into the first interpolation pixel vimg(x, y). In FIG. 5, the disparity vdsp at the left end of the first interpolation image of phase 0.6 is "0", and the video information representing background of the L image is drawn onto the pixel at the left end of the first interpolation image without change.

Subsequently, in step S420, a determination is made as to whether this processing has been executed on all the pixels (coordinates) of the original image (in this case, L image). At this occasion, this processing is not executed on all the pixels, and therefore, step S405 is performed again.

In this manner, steps S405 to S420 are repeated from the first pixel to the 19th pixel from the left of the first interpolation image As a result, from the first to the 19th pixel from the left of the first interpolation image, the disparity vdsp is "0", and the video information representing background of the L image is drawn onto the first interpolation image vimg

Subsequently, processing on the 20th pixel from the left of the first interpolation image will be explained In step S405, the image processing unit 115 adopts the first interpolation image vimg(x, y) as an L image simg(x', y') In FIG. 5, the disparity sdsp of the L image located at the 20th position from the left is "11" For this reason, the displacement between the coordinate of the first interpolation pixel vimg and the coordinate of the pixel simg of the L image is determined to be 11 pixels Subsequently, in step S410, the image processing unit 115 determines whether the disparity vdsp(x, y) of the first interpolation pixel at the position displaced by 11 pixels from the L image is equal to -1 (i.e., whether it is initial drawing or not) In this case, the 10th disparity vdsp(x, y) of the first interpolation pixel is set at "0" Therefore, the image processing unit 115 determines that this is not the initial drawing, and step S425 is subsequently performed, so that a determination is made as to whether the 20th disparity sdsp(x', y') of the L image is a value more than the 10th disparity vdsp(x, y) of the first interpolation image (i.e., whether it is foreground with respect to the pixel already drawn).

When the 20th disparity sdsp(x', y') of the L image is determined to be a value more than the 10th disparity vdsp(x, y) of the first interpolation image, the 20th pixel of the L image is video information in foreground with respect to the pixel already drawn onto the 10th position in the first interpolation image Otherwise, the 20th pixel of the L image is video information in background. In this case, the 20th disparity sdsp(x', y') of the L image is more than the 10th disparity vdsp(x, y) of the first interpolation image Therefore, the 20th pixel of the L image is determined to be video information in foreground, and is overwritten to the 10th position of the first interpolation image.

In this manner, steps S405, S410, S425, S430, S420 are repeated on the 10th pixel to the 15 pixel from the left of the first interpolation image As a result, the 10th pixel to the 15th pixel from the left of the first interpolation image are overwritten by the disparity vdsp and the video information vimg of the foreground object of the L image

In this case, the 26th pixel to the 33rd pixel from the left of the first interpolation image are processed in the same manner as the pixel at the left end of the first interpolation image, and therefore description thereabout is omitted. The image processing unit 115 performs, on all the lines of the L image, the above image processing for one line in the horizontal direction as explained above.

### (1.2.3. Example where interpolation image is generated from R image)

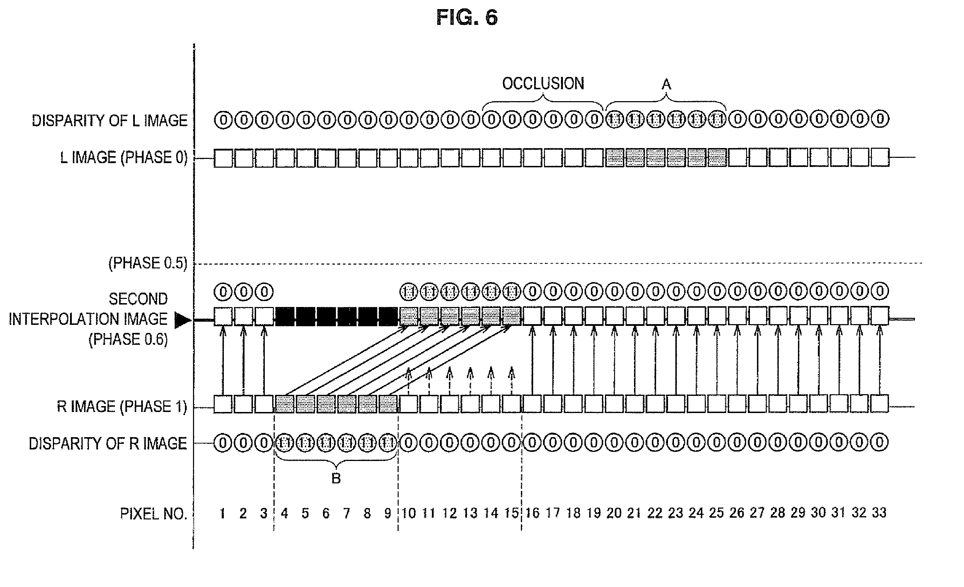

Subsequently, the interpolation image generation processing (FIG. 4) called in step S220 will be explained with reference to FIGS. 4 and 6 In the interpolation image generation processing of step S220, the second interpolation image is generated from the R image In the interpolation image generation processing called in step S220, the interpolation image is the second interpolation image of phase 0.6, and the original image is the R image. The indication method and the initialization are the same as those for generating the first interpolation image from the L image

The interpolation image generation processing of step S225 for generating the second interpolation image from the R image starts from step S405, and first, the image processing unit 115 adopts the second interpolation image vimg(x, y) as an L image simg(x', y') FIG. 6 shows the process of generation of the interpolation image (second interpolation image) from the R image The example of FIG. 6 shows how second interpolation pixels of phase 0 6 are generated pixel by pixel from the left side to the right side of the sheet. Alternatively, scanning may also be performed from the right to the left In this case, the disparity sdsp of the R image located at the left end is "0" For this reason, the coordinate of the second interpolation pixel vimg(x, y) corresponding to the pixel simg(x, y) of the R image is defined as being the same In other words, the displacement between the coordinate of the pixel at the right end of the second interpolation image vimg and the coordinate of the pixel at the right end of the L image simg is determined to be 0 pixel

In the region B where the disparity of the R image has value "11", the value "11" of the disparity sdsp of the R image is substituted into the position where the coordinate of the second interpolation image is displaced from the coordinate of the R image by 7 (= 11 × 04/0.6) pixels, so that the video information about the R image simg is drawn.

Subsequently, processing on the 10th pixel from the left of the second interpolation image will be explained In step S405, the image processing unit 115 adopts the second interpolation image vimg(x, y) as an R image simg(x', y'). In FIG. 6, the disparity sdsp of the R image located at the 10th position from the left is "0" For this reason, the coordinate of the second interpolation pixel vimg(x, y) corresponding to the pixel simg(x, y) of the R image is defined as being the same

Subsequently, in step S410, the image processing unit 115 determines whether the disparity vdsp(x, y) of the second interpolation pixel is equal to -1 (i.e , whether it is initial drawing or not) In this case, the 10th disparity vdsp(x, y) of the second interpolation pixel is set at "11" Therefore, the image processing unit 115 determines that the disparity vdsp(x, y) of the second interpolation pixel is not equal to -1 (this is not the initial drawing), and step S425 is subsequently performed, so that a determination is made as to whether the 10th disparity sdsp(x', y') of the R image is a value more than the 10th disparity vdsp(x, y) of the second interpolation image When the 10th disparity sdsp(x', y') of the R image is determined to be a value more than the 10th disparity vdsp(x, y) of the second interpolation image, the 10th pixel of the R image is video information in foreground with respect to the pixel already drawn onto the 10th position in the second interpolation image Otherwise, the 10th pixel of the R image is video information in background In this case, the 10th disparity sdsp(x', y') of the R image is less than the 10th disparity vdsp(x, y) of the second interpolation image. Therefore, the image processing unit 115 prohibits drawing the 10th pixel in the R image onto the tenth position of the second interpolation image Accordingly, this prevents the video in the foreground of the second interpolation image from being invaded by the video in the background

In this manner, steps S405, S410, S425, S420 are repeated on the 10th pixel to the 15 pixel from the left of the second interpolation image As a result, the 10th pixel to the 15th pixel from the left of the first interpolation image are not overwritten by the disparity vdsp and the video information vimg, and the information therein is retained

In this case, the 16th pixel to the 33rd pixel from the left of the second interpolation image are processed in the same manner as the pixel at the left end of the second interpolation image, and therefore description thereabout is omitted. The image processing unit 115 performs, on all the lines of the R image, the above image processing for one line in the horizontal direction as explained above. The image processing unit 115 performs, in parallel, processing for drawing the video information about the L image onto the first interpolation image (S215) and processing for drawing the video information about the R image onto the second interpolation image (S220) As a result, the generation speed of the interpolation image doubles

### (1.2.4 Merging of interpolation image generated from LR images)

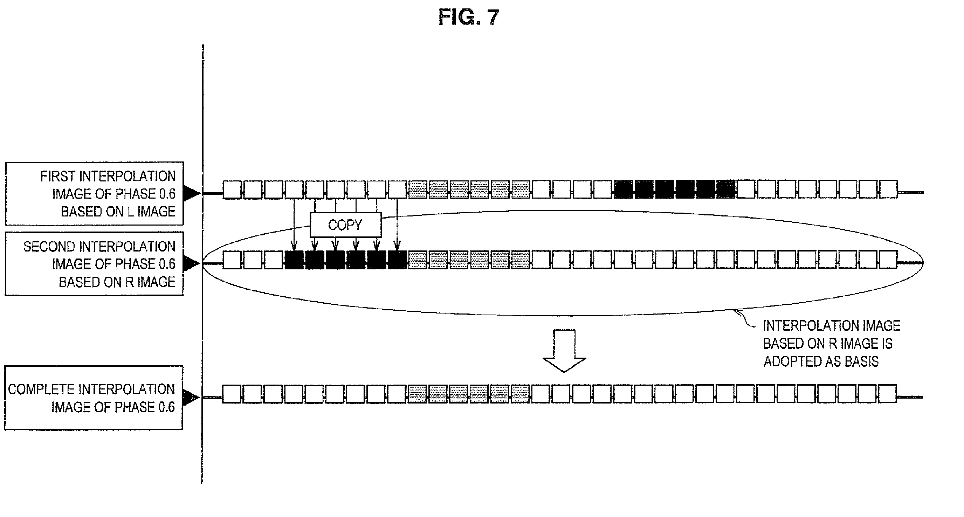

Subsequently, merging process of the first or second interpolation image will be explained with reference to FIG. 7 The image processing unit 115 draws, onto the pixel having no interpolation image drawn thereon generated from the original image having the phase close to the generation phase of the interpolation image of the first or second interpolation image, the corresponding pixel of the interpolation image generated from the other of the original images having the phase farther from the generation phase of the interpolation image. As a result, the desired interpolation image is completed. In the present embodiment, the original image of the first or second interpolation image having the phase close to the generation phase (phase 0 6) is the R image (phase 1) Therefore, the second interpolation image generated from the R image is given priority, and on the basis of the second interpolation image, the corresponding pixel of the first interpolation image is drawn onto the pixel of the second interpolation image onto which nothing has yet been drawn. In FIG. 7, the 4th to 9th pixels of the first interpolation image are drawn onto the 4th to 9th pixels from the right of the second interpolation image As a result, the interpolation image of phase 0 6 is completed.

However, the image processing unit 115 may draw, on the basis of the first interpolation image generated from the L image, the corresponding pixel of the second interpolation image onto the pixel of the first interpolation image onto which nothing has yet been drawn. However, it is preferable to adopt, as a basis, the interpolation image generated from the original image having the phase closer to the generation phase of the interpolation image This is because since the interpolation image having smaller displacement from the original image of the interpolation image generated is adopted as the basis, the chance of interpolation error is reduced as compared with a case where the interpolation image having larger displacement is adopted as the basis.

### [1 3 Examples of effects]

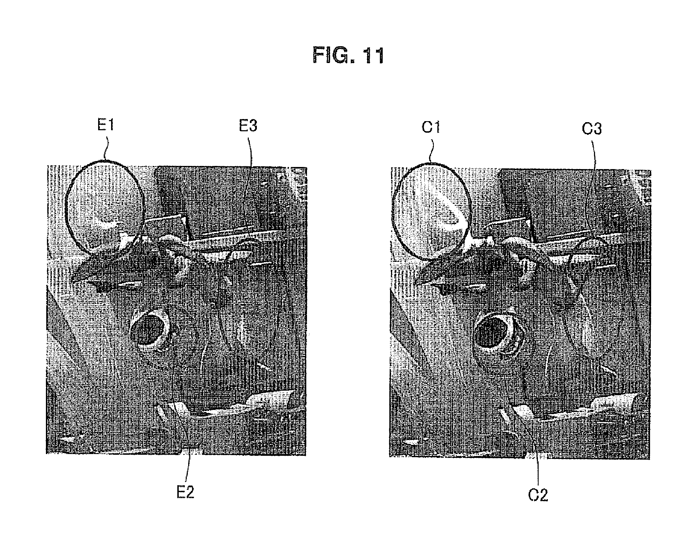

As described above, when an interpolation image is generated based on a disparity map, an interpolation error may occur due to an extraction error of disparity (parallax) An example of interpolation error includes a phenomenon in which a coordinate of the interpolation image onto which a pixel representing a foreground is already drawn is overwritten with a pixel representing a background As a result, for example, as shown in regions E1, E2, E3 of the interpolation image at the left of FIG 11, objects in foreground in some parts of the interpolation image are invaded and overwritten by objects in background, which degrades the image quality of the interpolation image

However, as described above, according to the image processing apparatus 10 according to the first embodiment, whether the video information about the original image is to be drawn onto the interpolation image or not is determined in accordance with the magnitude relationship of the parallactic information about the original image and the parallactic information about the interpolation image. In other words, drawing of the video information about the original image onto the interpolation image is permitted or prohibited in accordance with the magnitude relationship of the parallactic information about the original image and the interpolation image, so that the foreground information drawn in the interpolation image is not overwritten by the background information about the original image Accordingly, when a desired interpolation image is generated, this can prevent drawing error, e.g., an object to be drawn onto the foreground is invaded by an object in the background The interpolation image generated by the image processing method according to the present embodiment explained above is shown at the right of FIG.. 11 In the present embodiment, as shown in regions C1, C2, C3, objects to be drawn onto the foreground of the interpolation image are not invaded by objects in the background as compared with the regions E1, E2, E3, and therefore, the image quality of the interpolation image is improved

In the past, the L image and the R image are taken with a narrower interval between cameras and using many cameras so as to prevent increase in the interval between the L image and the R image, thereby making occlusion phenomenon inconspicuous However, according to the image processing apparatus 10 according to the first embodiment, the interval between the L image and the R image increases, and therefore, even when the difference of the disparity values increases, it is possible to avoid error of overwriting an object in foreground with an object in background By merging the first interpolation image generated from the L image and the second interpolation image generated from the R image, a portion having no interpolation image video information embedded therein can be embedded with the video information about the corresponding original image. Therefore, the problem of the occlusion can be solved Therefore, according to the present embodiment, it is not necessary to arrange many cameras so as to reduce the interval between the L image and the R image to make occlusion phenomenon inconspicuous. Therefore, the number of cameras required for generating an image can be reduced.

### <2. Second embodiment>

Subsequently, an image processing apparatus 10 according to the second embodiment of the present disclosure will be explained. The functional configuration of the image processing apparatus according to the second embodiment of the present disclosure (FIG. 1) is the same as the functional configuration of the image processing apparatus according to the first embodiment.. However, the image processing according to the second embodiment is different from the image processing of the first embodiment in that the processing for generating the first interpolation image from the L image and the processing for generating the second interpolation image from the R image are not executed in parallel. This will be hereinafter explained more specifically.

### [2 1 Function of image processing apparatus]

An image processing unit 115 draws, in accordance with magnitude relationship between the disparity of an original image of one of an L image and an R image and the disparity of a first interpolation image, video information about the original image of the one of the L image and the R image onto the first interpolation image Thereafter, the image processing unit 115 draws, in accordance with magnitude relationship between the disparity of the original image of the other of the L image and the R image and V of the first interpolation image, video information about the original image of the other of the L image and the R image onto the first interpolation image. Accordingly, the desired interpolation image is generated

At this occasion, it is preferable to choose, from the L image and the R image, an original image having a phase close to the generation phase of the interpolation image as the original image serving as a basis for generating the first interpolation image. For example, when the phase of the interpolation image is close to the phase of the R image, it is preferable to adopt the R image as the basis In such case, in the interpolation image generated based on the R image, pixel portions that could not be filled are interpolated with corresponding pixels of the interpolation image generated based on the L image. Likewise, when the phase of the interpolation image is close to the phase of the L image, it is preferable to adopt the L image as the basis. This is because since the interpolation image generated from the original image of which phase is closer to the phase of the interpolation image has less displacement on the image, the occlusion thereof is less than that of the interpolation image generated from the original image of which phase is farther from the phase of the interpolation image, and this makes it possible to generate the image with higher precision The interpolation image of phase 0 5 is an intermediate point between the L image and the R image, and therefore, the effects do not change no matter which of the original images is selected. In the present embodiment, when the phase of the interpolation image is less than 0.5, the L image is selected, and the first interpolation image is generated. When the phase of the interpolation image is equal to or more than 0.5, the R image is selected, and the first interpolation image is generated

### [2 2 Operation of image processing apparatus]

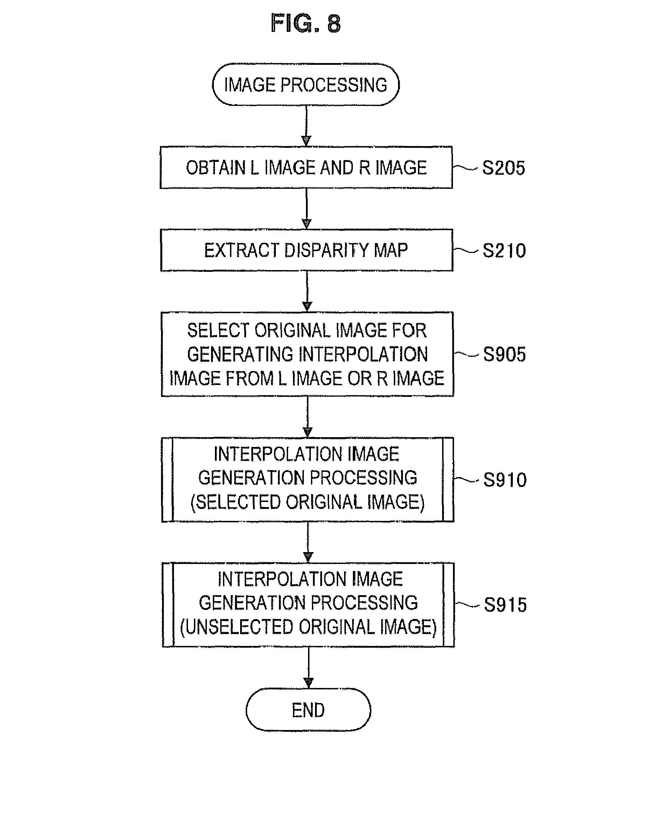

Subsequently, operation of the image processing apparatus 10 according to the second embodiment will be explained with reference to FIG. 8 FIG. 8 is a flowchart illustrating image processing according to the second embodiment When this processing starts, in step S205, an obtaining unit 105 obtains the L image and the R image Subsequently, in step S210, an extraction unit 110 generates a disparity map of the L image and a disparity map of the R image from the L image and the R image

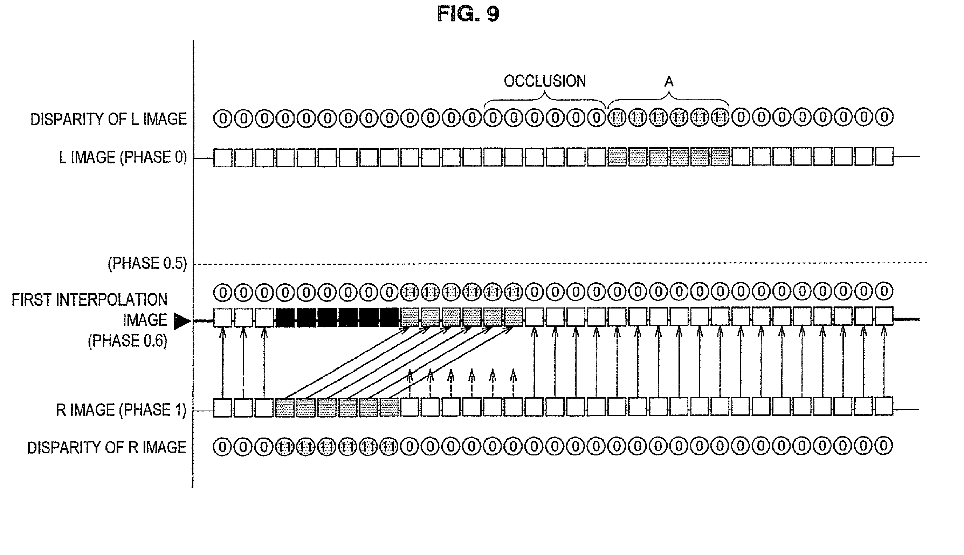

Subsequently, in step S905, the image processing unit 115 selects an original image for generating the first interpolation image from the L image and the R image The image processing unit 115 selects the R image having a phase close to the generation phase (phase 0 6) of the first interpolation image as shown in FIG. 9 as the original image serving as the basis for generating the first interpolation image

Subsequently, after the interpolation image generation processing is executed on the basis of the original image (R image) selected in step S910, the interpolation image generation processing is executed on the basis of the original image (L image) that is not selected in step S915. In the second embodiment, the processing in steps S910, S915 are performed in series.

### (2.2.1 Example where interpolation image is generated from selected original image)

In step S910, like the first embodiment, the interpolation image generation processing is executed in the processing order as shown in FIG 4 Therefore, as shown in FIG 9, the same interpolation image as that of FIG 6 explained in the first embodiment is generated. However, in the present embodiment, the interpolation image is generated while the priority is given to the R image, and therefore, in this case, the generated interpolation image is the first interpolation image In the present embodiment, the second interpolation image is not generated.

### (2.2.2 Example where interpolation image is generated from unselected original image)

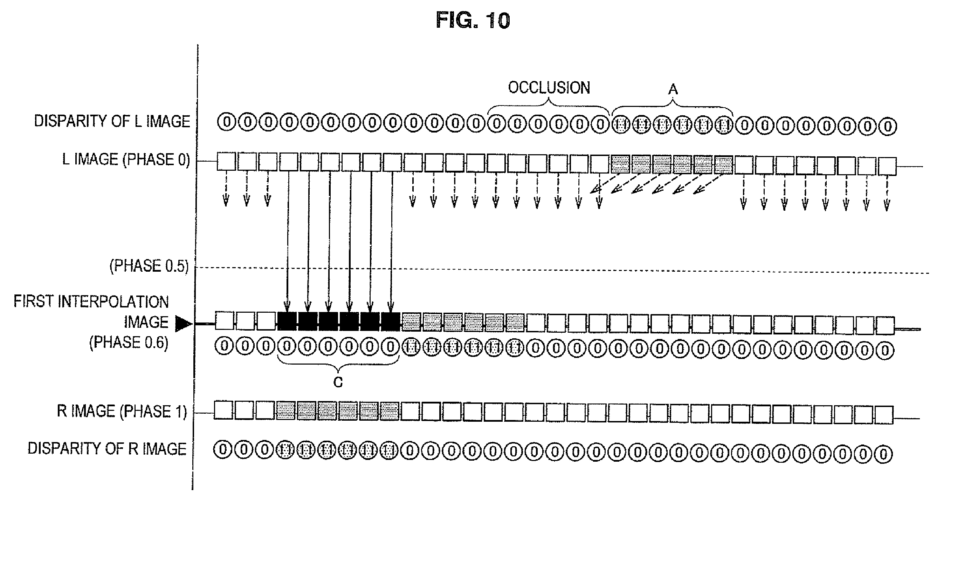

In step S915, the interpolation image generation processing is also executed in the processing order as shown in FIG 4. However, in the present embodiment, the interpolation image generation processing is executed using the first interpolation image and L image Therefore, as shown in FIG. 10, before the interpolation image generation processing of step S915 is executed, the disparity vdsp and the video information vimg from the R image are already embedded into the first interpolation image. In fact, the disparity vdsp and the video information vimg for each pixel of the first interpolation image are stored to the memory unit 120.

In this state, further, the interpolation image generation processing is executed on the basis of the L image In the case of FIG. 10, in a C region in which the disparity vdsp of the first interpolation image is set at the initial value, the disparity sdsp of the L image is substituted into the disparity vdsp of the first interpolation image, and the video information simg of the L image is substituted into the video information vimg of the first interpolation image, but drawing of the L image onto all the other pixels is prohibited.

### [2 3 Examples of effects]

Accordingly, in the second embodiment, when the interpolation image is generated as shown at the right of FIG. 11, this can prevent drawing error, e.g., an object to be drawn onto the foreground is invaded by an object in the background.

In the present embodiment, steps S910, S915 are executed in order without performing parallel processing, and therefore, it is not necessary to perform the step for merging the two interpolation images

In the present embodiment, the problem of occlusion can also be solved by generating the interpolation image using the L image and the R image Therefore, according to the present embodiment, it is also not necessary to arrange many cameras so as to reduce the interval between the L image and the R image to make occlusion phenomenon inconspicuous. Therefore, the number of cameras required for generating an image can be reduced.

It should be understood by those skilled in the art that various modifications, combinations, sub-combinations and alterations may occur depending on design requirements and other factors insofar as they are within the scope of the appended claims or the equivalents thereof.

For example, in the above embodiments, the amount of displacement in the horizontal direction is extracted as a disparity, but this technique is not limited thereto. For example, in this technique, the amount of displacement in the vertical direction may also be extracted as a disparity

In the above embodiments, when the disparity value of the image to be drawn is equal to the disparity value of the image to which the image is to be drawn, overwriting of the video information about the original image is prohibited, but this technique is not limited thereto. Alternatively, when the disparity value of the image to be drawn is equal to the disparity value of the image to which the image is to be drawn, overwriting of the video information about the original image may be permitted

In the above embodiments, the background having parallactic information about "0" and the foreground having parallactic information more than the parallactic information about "0" are distinguished from each other on the basis of the magnitude relationship of the parallactic information, and the interpolation image is generated so that the foreground/background relationship is not lost between a foreground object and a background object However, this technique is not limited thereto Alternatively, it is to be understood that, from magnitude relationship of parallactic information about a foreground object and another foreground object, the interpolation image may also be generated so that the foreground/background relationship is not lost between objects in the foreground.

In the above embodiments, the interpolation image is generated to obtain a multi-viewpoint image for 3D display from stereo images, but this technique is not limited thereto. For example, this technique can also be applied to generate an interpolation image for displaying a 2D image with different angles such as hologram. Display apparatuses having this technique include not only a display apparatus capable of 3D display but also a display only capable of 2D display, and a display apparatus capable of switching 3D and 2D displays.

This technique can also be applied to generation of an image for a so-called virtual studio. For example, a virtual studio in which a person is standing beside a table is considered When an object, i.e., a table, and an object, i.e., a person, are drawn in an overlapping manner, a determination is made according to this technique as to whether the other object is overwritten on the one object

Each object has a disparity value of its own When an object moves, the disparity value changes according to the movement Even if the object does not move, the content may be moved by changing the disparity value At that occasion, using this technique, the foreground object and the background object can be switched by comparing the disparity values of the contents. As described above, this technique can be applied to not only image generation for 3D purpose but also generation of a new image for 2D purpose from images for 2D purpose in such a form that the two images are merged

For example, in the above embodiments, the left eye image (L image) and the right eye image (R image) are examples of original images, and the present disclosure is not limited thereto. The original images may be two images taken from different directions.

The technical scope of embodied by the present invention includes the following configurations
(1) An image processing method including:
   obtaining a first original image and a second original image, and
   determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image
(2) The image processing method according to (1),
   wherein a determination is made as to whether the video information about the original image of the one of the first original image and the second original image is foreground or background of the interpolation image from the magnitude relationship of the parallactic information, and
   when the video information about the original image of the one of the first original image and the second original image is determined to be the background, drawing of the video information about the original image of the one of the first original image and the second original image onto the interpolation image is prohibited
(3) The image processing method according to (1) or (2),
   wherein a determination is made as to whether the video information about the original image of the one of the first original image and the second original image is foreground or background of the interpolation image from the magnitude relationship of the parallactic information, and
   when the video information about the original image of the one of the first original image and the second original image is determined to be the foreground, the video information about the original image of the one of the first original image and the second original image is drawn onto the interpolation image.
(4) The image processing method according to (2) or (3),
   wherein the video information about the original image of the one of the first original image and the second original image is drawn onto the first interpolation image in accordance with magnitude relationship between the parallactic information about the original image of the one of the first original image and the second original image and the parallactic information about the first interpolation image,
   the video information about the original image of the other of the first original image and the second original image is drawn onto the second interpolation image in accordance with the magnitude relationship between the parallactic information about the original image of the other of the first original image and the second original image and the parallactic information of the second interpolation image, and thereby
   the interpolation image is generated based on the first and second interpolation images
(5) The image processing method according to (4),
   wherein drawing of the video information about the original image of the one of the first original image and the second original image onto the first interpolation image, and drawing of the video information about the original image of the other of the first original image and the second original image onto the second interpolation image are executed in parallel.
(6) The image processing method according to (4) or (5),
   wherein a pixel on which nothing is drawn yet in the interpolation image of one of the first interpolation image and the second interpolation image is drawn with a corresponding pixel of the interpolation image of the other of the first interpolation image and the second interpolation image
(7) The image processing method according to (6),
   wherein the interpolation image of the one of the first interpolation image and the second interpolation image is an interpolation image generated from an original image having a phase closer to a generation phase of the interpolation image than that of the other of the first interpolation image and the second interpolation image.
(8) The image processing method according to (2) or (3),
   wherein the video information about the original image of the one of the first original image and the second original image is drawn onto the first interpolation image in accordance with magnitude relationship between the parallactic information about the original image of the one of the first original image and the second original image and the parallactic information about the first interpolation image,
   the video information about the original image of the other of the first original image and the second original image is drawn onto a pixel on which nothing is drawn yet in the first interpolation image in accordance with magnitude relationship between the parallactic information about the original image of the other of the first original image and the second original image and the parallactic information about the first interpolation image, and thereby the interpolation image is generated
(9) The image processing method according to (8),
   wherein an original image having a phase closer to the generation phase of the interpolation image is selected as an original image of interpolation from the first original image and the second original image
(10) The image processing method according to any one of (1) to (9),
   wherein the parallactic information of the first original image and the second original image is obtained, or the parallactic information of the first original image and the second original image is generated from the first original image and the second original image.
(11) The image processing method according to (10),
   wherein the parallactic information is an amount of displacement in a horizontal direction of the first original image and the second original image, or is an amount of displacement in a vertical direction of the first original image and the second original image
(12) An image processing apparatus including:
   an obtaining unit for obtaining a first original image and a second original image; and
   an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image
(13) A display apparatus including:
   an obtaining unit for obtaining a first original image and a second original image;
   an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image; and
   a display control unit for controlling display of the first original image, the second original image, and the interpolation image..

The present disclosure contains subject matter related to that disclosed in Japanese Priority Patent Application JP 2011-103037 filed in the Japan Patent Office on May 2, 2011, the entire content of which is hereby incorporated by reference

## Claims

1. An image processing method comprising:
obtaining a first original image and a second original image; and
determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image

2. The image processing method according to claim 1,
wherein a determination is made as to whether the video information about the original image of the one of the first original image and the second original image is foreground or background of the interpolation image from the magnitude relationship of the parallactic information, and
when the video information about the original image of the one of the first original image and the second original image is determined to be the background, drawing of the video information about the original image of the one of the first original image and the second original image onto the interpolation image is prohibited

3. The image processing method according to claim 1,
wherein a determination is made as to whether the video information about the original image of the one of the first original image and the second original image is foreground or background of the interpolation image from the magnitude relationship of the parallactic information, and
when the video information about the original image of the one of the first original image and the second original image is determined to be the foreground, the video information about the original image of the one of the first original image and the second original image is drawn onto the interpolation image

4. The image processing method according to claim 2,
wherein the video information about the original image of the one of the first original image and the second original image is drawn onto the first interpolation image in accordance with magnitude relationship between the parallactic information about the original image of the one of the first original image and the second original image and the parallactic information about the first interpolation image,
the video information about the original image of the other of the first original image and the second original image is drawn onto the second interpolation image in accordance with the magnitude relationship between the parallactic information about the original image of the other of the first original image and the second original image and the parallactic information of the second interpolation image, and thereby
the interpolation image is generated based on the first and second interpolation images

5. The image processing method according to claim 4,
wherein drawing of the video information about the original image of the one of the first original image and the second original image onto the first interpolation image, and drawing of the video information about the original image of the other of the first original image and the second original image onto the second interpolation image are executed in parallel.

6. The image processing method according to claim 4,
wherein a pixel on which nothing is drawn yet in the interpolation image of one of the first interpolation image and the second interpolation image is drawn with a corresponding pixel of the interpolation image of the other of the first interpolation image and the second interpolation image.

7. The image processing method according to claim 6,
wherein the interpolation image of the one of the first interpolation image and the second interpolation image is an interpolation image generated from an original image having a phase closer to a generation phase of the interpolation image than that of the other of the first interpolation image and the second interpolation image

8. The image processing method according to claim 2,
wherein the video information about the original image of the one of the first original image and the second original image is drawn onto the first interpolation image in accordance with magnitude relationship between the parallactic information about the original image of the one of the first original image and the second original image and the parallactic information about the first interpolation image,
the video information about the original image of the other of the first original image and the second original image is drawn onto a pixel on which nothing is drawn yet in the first interpolation image in accordance with magnitude relationship between the parallactic information about the original image of the other of the first original image and the second original image and the parallactic information about the first interpolation image, and thereby the interpolation image is generated..

9. The image processing method according to claim 8,
wherein an original image having a phase closer to the generation phase of the interpolation image is selected as an original image of interpolation from the first original image and the second original image

10. The image processing method according to claim 1,
wherein the parallactic information of the first original image and the second original image is obtained, or the parallactic information of the first original image and the second original image is generated from the first original image and the second original image.

11. The image processing method according to claim 10,
wherein the parallactic information is an amount of displacement in a horizontal direction of the first original image and the second original image, or is an amount of displacement in a vertical direction of the first original image and the second original image

12. An image processing apparatus comprising:
an obtaining unit for obtaining a first original image and a second original image; and
an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image

13. A display apparatus comprising:
an obtaining unit for obtaining a first original image and a second original image,
an image processing unit for determining, in accordance with magnitude relationship between parallactic information about an original image of one of the first original image and the second original image and parallactic information about an interpolation image of the first original image and the second original image, whether video information about the original image of the one of the first original image and the second original image is drawn onto the interpolation image; and
a display control unit for controlling display of the first original image, the second original image, and the interpolation image
